# EUROPÄISCHE PATENTSCHRIFT

(11) **EP 3 758 962 B1**
(45) Veröffentlichungstag und Bekanntmachung des Hinweises auf die Patenterteilung: **15.06.2022**
(21) Anmeldenummer: 19701164.6
(22) Anmeldetag: 14.01.2019
(51) Int. Cl.: B60G 17/027, B60G 11/56, B60G 11/58, B60G 15/06, B60G 15/12, B60G 17/04

(54) **FEDER-DÄMPFERSYSTEM MIT VERZÖGERUNGSFREI UMSCHALTBARER FEDERRATE**
SPRING-DAMPER SYSTEM HAVING A SPRING RATE THAT CAN BE SWITCHED WITHOUT DELAY
SYSTÈME AMORTISSEUR À RESSORT À CONSTANTE DE RAPPEL POUVANT ÊTRE COMMUTÉE DE FAÇON IMMÉDIATE

(30) Priorität: 26.02.2018 DE 102018202827
(43) Veröffentlichungstag der Anmeldung: 06.01.2021
(73) Patentinhaber: Bayerische Motoren Werke Aktiengesellschaft, 80809 München (DE)
(72) Erfinder: SCHATZBERGER, Uwe, 84172 Buch (DE); RIEDIGER, Martin, 81249 München (DE); DIETRICH, Maximilian, 82229 Meiling Seefeld (DE)
(86) Internationale Anmeldenummer: PCT/EP2019/050770
(87) Internationale Veröffentlichungsnummer: WO 2019/161994

(56) Entgegenhaltungen:
- WO-A1-2015/114536
- DE-A1- 4 006 109
- DE-A1- 4 104 904
- DE-A1-102010 046 602

## Beschreibung

Die Erfindung betrifft ein Feder-Dämpfersystem für eine Radaufhängung eines Kraftfahrzeugs, wobei die Federrate des Feder-Dämpfersystems durch eine Schalteinrichtung verzögerungsfrei umschaltbar ist.

Aus dem Stand der Technik sind verschiedene Feder-Dämpfersysteme bzw. Federbeine oder Telegabeln bekannt, bei denen die Federrate einstellbar ist. Diese kommen insbesondere bei Krafträdern zum Einsatz. Die Federbeine weisen dabei zumeist eine Schraubenfeder mit einer vorbestimmten Federkonstante auf. Die Federwirkung des Federbeins wird in Abhängigkeit einer Beladung des Kraftfahrzeugs oder in Abhängigkeit einer zu fahrenden Strecke eingestellt. Die einfachste Möglichkeit die Federrate vorbestimmte Bedingungen einzustellen, ist die Feder gegen eine andere Feder mit einer anderen Federkonstante auszutauschen. Der manuelle Tausch der Feder ist jedoch zeitaufwändig und nur mit geeignetem Werkzeug durchführbar.

Im Stand der Technik sind zudem Federbeine bekannt, die aus zwei verschiedenen Schraubenfedern bestehen, die unterschiedliche Federstärken bzw. Federkonstanten aufweisen. Abhängig von der gewünschten Beladung oder der zu fahrenden Strecke, wird dann eine darauf angepasste Federkonstante eingestellt, die sich aus den Federkonstanten der einzelnen Federn ergibt, indem eine der Federn ausgetauscht oder mechanisch blockiert wird. Problematisch dabei ist jedoch, dass ein Umschaltvorgang zwischen den verschiedenen Federkonstanten nicht unverzüglich erfolgen kann. Ein mechanisches Sperrelement muss sich entlang eines Weges bewegen, um die Feder oder ein anderes Bauteil blockieren zu können. Durch die notwendige Bewegung des Sperrelements, welche innerhalb einer Umschaltzeit stattfindet, kann es bei einem im Stand der Technik bekannten System bei einer Belastung während der Umschaltzeit, beispielsweise an dem Sperrelement oder an der Feder, zu Beschädigungen kommen, sodass eine Reparatur notwendig wird. Die Umschaltung ist daher zumeist nur möglich, wenn das Federbein unbelastet ist und das Fahrzeug steht. Zudem benötigt der Umschaltvorgang eine Umschaltzeit, innerhalb der das Fahrzeug nicht belastet oder bewegt werden kann.

Weitere aus dem Stand der Technik bekannte Feder-Dämpfersysteme mit einer umschaltbaren Federkonstante können ferner durch alternative Federkonzepte, wie beispielsweise einer Luftfeder, gebildet sein, wobei diese zumeist teuer sind und erhöhte Anforderungen an Bauraum, Energieverbrauch und Wartung aufweisen. Derartige Feder-Dämpfersysteme kommen daher insbesondere bei Krafträdern nur bedingt in Frage.

Weitere, teilweise schaltbare Feder-Dämpfersysteme sind ferner aus den Schriften DE 41 04 904 A1, WO 2015/114536 A1, DE 10 2010 046 602 A1, DE 10 2004 032 083 A1 und DE 40 06 109 A1 bekannt, wobei das Dokument DE 41 04 904 A1 ein Feder-Dämpfersystem entsprechend dem Oberbegriff des Anspruchs 1 offenbart.

Der Erfindung liegt deshalb die Aufgabe zugrunde, die vorgenannten Nachteile zu überwinden und ein kostengünstiges Feder-Dämpfersystem bereitstellen, bei dem die Federkonstante verzögerungsfrei und unter Last umschaltbar ist.

Diese Aufgabe wird durch die Merkmalskombination gemäß Patentanspruch 1 gelöst.

Erfindungsgemäß wird daher ein Feder-Dämpfersystem für eine Radaufhängung eines Kraftfahrzeugs vorgeschlagen. Das Feder-Dämpfersystem umfasst eine Tragfeder mit einer Federkonstante k_{T}, einen zu der Tragfeder parallel wirkenden und mit einem Fluid gefüllten Druckerzeuger und eine Zusatzfedereinheit mit einer Zusatzfeder, die eine Federkonstante kz aufweist. Ferner umfasst das Feder-Dämpfersystem eine Schalteinrichtung mit einer Blockierstellung und einer Freigabestellung zum Schalten der Zusatzfeder. Zudem umfasst das Feder-Dämpfersystem einen zu der Tragfeder parallel wirkenden Dämpfer. Die Schalteinrichtung sperrt in der Blockierstellung die Zusatzfeder. In der Freigabestellung wirkt die Zusatzfeder mittels des Fluides zu der Tragfeder parallel. Die Tragfeder und der Druckerzeuger wirken insofern parallel, dass eine Stauchung oder Dehnung der Tragfeder zu einer Bewegung an dem Druckerzeuger führt. Eine Stauchung der Tragfeder führt vorzugsweise zu einer Bewegung einer Kolbenstange des Druckerzeugers in einen Druckzylinder des Druckerzeugs und eine Dehnung der Tragfeder zu einer Bewegung der Kolbenstange aus dem Druckerzeuger. Hierbei wird durch die Stauchung der Tragfeder und die Bewegung der Kolbenstange in den Druckerzeuger ein Druck in dem Druckzylinder erzeugt.

Die Schalteinrichtung sperrt die Zusatzfeder nicht mechanisch, sondern durch eine Änderung eines Fluidflusses des Fluides, sodass die Zusatzfeder von dem Fluid nicht oder nur geringfügig druckbeaufschlagt wird, wenn die Schalteinrichtung sich in der Blockierstellung befindet.

Die Gesamtfederkonstante k_{G1} des Feder-Dämpfersystems ergibt sich mit der Schalteinrichtung in der Blockierstellung im Wesentlichen aus der Federkonstanten k_{T} der Tragfeder. Ist die Schalteinrichtung in der Freigabestellung, wirkt die Zusatzfeder parallel zu der Tragfeder, sodass die Gesamtfederkonstante k_{G2} des Feder-Dämpfersystems im Wesentlichen die Summe der Federkonstante k_{T} und der Federkonstante kz ist. Somit ergibt sich für die Gesamtfederkonstanten: k_{G1} = k_{T} (Schalteinrichtung in Blockierstellung)
k_{G2} = k_{T} + kz (Schalteinrichtung in Freigabestellung)

Eine vorteilhafte Ausführungsvariante des Feder-Dämpfersystems sieht vor, dass es einen Hohlzylinder aufweist, indem zumindest die Zusatzfedereinheit und der Druckerzeuger in Reihe zueinander angeordnet sind.

Bei einer vorteilhaften Weiterbildung sind in dem Hohlzylinder die Tragfeder, die Zusatzfedereinheit und der Druckerzeuger in Reihe zueinander angeordnet, wobei sich die Tragfeder auf dem Druckzylinder abstützt, sodass Druckerzeuger und Tragfeder weiterhin parallel zueinander wirken. Vorzugsweise erstreckt sich die Kolbenstange des Druckerzeugers durch die Tragfeder und entlang dessen Längsachse.

Der Druckerzeuger weist gemäß der Erfindung einen Druckzylinder, einen Druckkolben und eine sich in einen Druckzylinderinnenraum des Druckzylinders hinein erstreckende Kolbenstange auf, an deren in dem Druckzylinderinnenraum angeordneten Seite der Druckkolben angeordnet ist. Der Druckkolben teilt den Druckzylinderinnenraum in eine erste Arbeitskammer und eine zweite Arbeitskammer, wobei die Kolbenstange sich durch die erste Arbeitskammer erstreckt. Der Druckkolben weist eine Durchlassvorrichtung auf, die es dem Fluid des Druckerzeugers erlaubt von der ersten in die zweite Arbeitskammer oder umgekehrt zu strömen. Durch die Durchlassvorrichtung und den Volumenstrom des Fluides durch die Durchlassvorrichtung, ist das Dämpfungsverhalten des Druckerzeugers steuerbar bzw. einstellbar, wobei bei einer Ausführungsform, bei der Dämpfer und Druckerzeuger getrennt voneinander ausgebildet sind, mit der Durchlassvorrichtung bzw. dem Druckerzeuger vorzugsweise keine Dämpfkraft aufgebaut werden soll, sodass die Durchlassvorrichtung den Volumenstrom im Wesentlichen nicht drosselt oder begrenzt. Die Durchlassvorrichtung kann beispielsweise durch Bohrungen in dem Druckkolben, durch ein Ventil oder durch Nuten am Außenumfang des Druckkolbens realisiert werden. Wesentlich für den Druckerzeuger ist, dass er durch die Kolbenstange in seinem Druckzylinderinnenraum einen Überdruck aufbaut, wenn sich die Kolbenstange in den Druckzylinderinnenraum hinein bewegt. Der Druckerzeuger muss daher nicht zwingend eine Druckkolben aufweisen. Dieser dient der Führung der Kolbenstange in dem Druckzylinderinnenraum. Durch den erzeugten Druck wird eine erhöhte Ausschubkraft für die Kolbenstange erzeugt und es wird, je nach Stellung der Schalteinrichtung Fluid aus dem Druckzylinderinnenraum in die Zusatzfedereinheit oder einen Fluid-Ausgleichsbehälter verdrängt.

Zudem ist erfindungsgemäß vorgesehen, dass die Zusatzfedereinheit aus einem Federzylinder gebildet ist, in dessen Federzylinderinnenraum die Zusatzfeder, ein Trennkolben und ein Trennkolbenanschlag angeordnet sind. Der Trennkolben teilt den Federzylinderinnenraum in eine dritte Arbeitskammer und eine Federkammer, in welcher die Zusatzfeder angeordnet ist. Die Zusatzfeder drückt den Trennkolben in dem Federzylinder gegen den Trennkolbenanschlag bzw. in Richtung des Trennkolbenanschlags. Die Zusatzfeder stützt sich dabei an dem Trennkolben und einer Wand des Federzylinders ab. Ist der Trennkolben durch die Zusatzfeder an den Trennkolbenanschlag gedrückt, ist die dritte Arbeitskammer in ihrem Volumen minimal. Der Trennkolbenanschlag kann durch eine weitere Wand des Federzylinders gebildet sein.

Die zweite Arbeitskammer des Druckzylinderinnenraums ist bei einer Ausbildungsvariante der Erfindung, die von Vorteil ist, strömungswirksam mit der dritten Arbeitskammer des Federzylinderinnenraums verbunden. Die strömungswirksame Verbindung wird beispielsweise durch einen Fluidkanal und insbesondere durch einen Fluiddurchlass zwischen den Kammern ausgebildet. Dadurch ist es dem Fluid möglich, von der zweiten Arbeitskammer in die dritte Arbeitskammer zu strömen. Wird das Fluid in der zweiten Arbeitskammer des Druckerzeugers durch die sich in den Druckzylinder hinein bewegende Kolbenstange aus dem Druckerzeuger verdrängt und kann nicht über den ersten Fluidkanal in den Fluid-Ausgleichsbehälter strömen, wird das Fluid in die dritte Arbeitskammer verdrängt. Das in die dritte Arbeitskammer verdrängte Fluid wirkt gegen den Trennkolben und verschiebt den Trennkolben gegen die Zusatzfederkraft, durch welche das Fluid druckbeaufschlagt wird. Dabei wird der Trennkolben ausschließlich durch das verdrängte Fluid verschoben und nicht durch eine eventuell von dem Druckerzeuger oder dem Dämpfer erzeugte Dämpfkraft. Der Trennkolben wird gegen die Federkraft der Zusatzfeder in dem Federzylinder verschoben, wobei die Zusatzfeder über den Trennkolben, das Fluid und die Kolbenstange parallel zu der Tragfeder wirkt. Die sich bei einer Stauchung der Tragfeder parallel dazu in den Druckzylinder bewegende Kolbenstange verdrängt in dem Druckzylinder Fluid mit dem Volumen des Abschnitts der Kolbenstange, der in dem Druckzylinder angeordnet ist. Mit der Schalteinrichtung in der Freigabestellung, wird das Fluid zumindest zum Teil in den Federzylinder gefördert, wodurch das Fluid über den Trennkolben auf die Zusatzfeder wirkt und diese staucht. Die Zusatzfeder baut dabei eine Federkraft auf, die über den Trennkolben auf das Fluid wirkt, wodurch der Druck in den Arbeitskammern aufgebaut und damit die Ausschubkraft der Kolbenstange erhöht wird. Dadurch wirken Tragfeder und Zusatzfeder parallel.

Erfindungsgemäß weist das Feder-Dämpfersystem einen Fluid-Ausgleichsbehälter, einen ersten und einen zweiten Fluidkanal auf. Die Schalteinrichtung ist ein elektrisch steuerbares Sperrventil mit einer Sperrstellung und einer Durchflussstellung, das ausgebildet ist, einen Fluidfluss des Fluides, mit dem der Druckerzeuger gefüllt ist, durch den ersten Fluidkanal zu sperren. Der Druckerzeuger ist mittels des ersten Fluidkanals über das Sperrventil strömungswirksam mit dem Ausgleichsbehälter verbunden und der Ausgleichsbehälter ist mittels des zweiten Fluidkanals strömungswirksam mit dem Druckerzeuger verbunden. Das Sperrventil sperrt in der Sperrstellung einen Fluidfluss durch den ersten Fluidkanal und gibt den Fluidfluss in der Durchflussstellung frei. Die Sperrstellung des Sperrventils entspricht der Freigabestellung der Schalteinrichtung und die Durchflussstellung des Sperrventils entspricht der Blockierstellung der Schalteinrichtung. Die Fluidkanäle können zumindest Abschnittsweise integral miteinander ausgebildet sein.

Ein nicht von der Erfindung abgedecktes Beispiel sieht vor, dass der erste Fluidkanal zumindest abschnittsweise durch die Kolbenstange des Druckerzeugers verläuft. Vorzugsweise erstreckt er sich entlang der Längsachse der Kolbenstange und zumindest über den Abschnitt der Kolbenstange, der in den Druckzylinder eindringen kann. Das Sperrventil kann ebenfalls in der Kolbenstange oder an der Kolbenstange angeordnet sein. Beispielsweise könnte das Sperrventil auch in dem Druckkolben oder in einer Abschlusskappe oder Abschlussplatte des Druckerzeugers angeordnet sein. Der erste Fluidkanal weist einen ersten, von dem Druckerzeuger zu der Schalteinrichtung führenden Abschnitt und einen zweiten, von der Schalteinrichtung zu dem Fluid-Ausgleichsbehälter führenden Abschnitt auf. Sowohl der erste als auch der zweite Abschnitt können sich durch die Kolbenstange erstrecken, wobei die Abschnitte zumindest zum Teil zueinander parallel verlaufen können, sodass die Kolbenstange zumindest abschnittsweise zwei Bohrungen aufweist. Dabei bildet eine erste Bohrung den ersten Abschnitt des ersten Fluidkanals und die zweite Bohrung den zweiten Abschnitt des ersten Fluidkanals. Die Kolbenstange weist in dem genannten Ausführungsbeispiel immer eine Bohrung auf, die zumindest einen Teil des Fluidkanals bildet.

Eine weitere vorteilhafte Weiterbildung sieht dabei vor, dass sich sowohl der erste Fluidkanal als auch der zweite Fluidkanal von der zweiten Arbeitskammer ausgehend durch die Kolbenstange erstrecken.

Durch ein erstes Rückschlagventil, das in dem ersten Fluidkanal angeordnet ist, wird bei einer weiteren Weiterbildung ein Fluidfluss von dem Ausgleichsbehälter in den Druckerzeuger gesperrt, sodass das Fluid mittels des ersten Fluidkanals nur von dem Druckerzeuger in den Ausgleichsbehälter strömen kann. Das erste Rückschlagventil ist dabei vorzugsweise in der Kolbenstange angeordnet oder zumindest zum Teil von der Kolbenstange ausgebildet. Zusätzlich oder alternativ ist vorgesehen, dass ein zweites Rückschlagventil in dem zweiten Fluidkanal angeordnet ist und das zweite Rückschlagventil einen Fluidfluss von dem Druckerzeuger in den Ausgleichsbehälter sperrt, sodass das Fluid mittels des zweiten Fluidkanals nur von dem Ausgleichsbehälter in den Druckerzeuger strömen kann.

Bei einem nicht von der Erfindung abgedeckten Beispiel erstreckt sich der erste Fluidkanal von der zweiten Arbeitskammer durch den Druckkolben und die Kolbenstange zu dem ersten Rückschlagventil, von dem ersten Rückschlagventil zu dem Sperrventil und von dem Sperrventil zu dem Ausgleichsbehälter. Der zweite Fluidkanal erstreckt sich von dem Ausgleichsbehälter zu dem zweiten Rückschlagventil und von dem zweiten Rückschlagventil zu der ersten Arbeitskammer. Das zweite Rückschlagventil ist vorzugsweise in oder an einer Wand des Druckzylinders angeordnet, durch welche sich die Kolbenstange erstreckt, sodass der zweite Fluidkanal zumindest zum Teil die Wand durchläuft.

Der Fluid-Ausgleichsbehälter ist bei einer günstigen Ausbildungsform der Erfindung durch den Hohlzylinder gebildet. Vorzugsweise ist der Fluid-Ausgleichsbehälter als Kammer des Hohlzylinders ausgebildet, die an die erste Arbeitskammer des Druckzylinders angrenzt. Die Kolbenstange erstreckt sich dabei zumindest zum Teil durch den Ausgleichsbehälter. Ferner ist die Tragfeder vorzugsweise zumindest zum Teil in dem Ausgleichsbehälter angeordnet, sodass ein Federraum für die Tragfeder und der Fluid-Ausgleichsbehälter integral miteinander ausgebildet sind.

Ferner ist eine Ausführungsformen vorteilhaft, bei der sich kein Fluidkanal in einer in Radialrichtung des Hohlzylinders außen liegenden Außenwand oder außen an einer Mantelfläche des Hohlzylinders erstreckt, sodass der Bauraum des Hohlzylinders durch die Fluidkanäle nicht vergrößert und die Außenwände nicht geschwächt werden.

Die Volumenströme durch die Fluidkanäle und die Durchlassvorrichtung des Druckkolbens sind vorzugsweise aufeinander abgestimmt, sodass ein durch die Kolbenstange in dem Druckzylinderinnenraum verdrängtes Fluid durch die erste Fluidleitung mit der Schalteinrichtung in Blockierstellung (Sperrventil in Durchflussstellung) in den Fluid-Ausgleichsbehälter fließen kann.

Das Feder-Dämpfersystem umfasst erfindungsgemäß zudem eine Gasfedereinheit. Die Gasfedereinheit ist aus einem Gasfederzylinder gebildet, in dessen Gasfederzylinderinnenraum ein als Gasfeder wirkendes Gas, ein Gastrennkolben und ein Gastrennkolbenanschlag angeordnet sind. Der Gastrennkolben teilt den Gasfederzylinderinnenraum in eine vierte Arbeitskammer und eine Gasfederkammer, in welcher das Gas angeordnet ist. Die Gasfeder drückt den Gastrennkolben permanent in dem Gasfederzylinder in Richtung des Gastrennkolbenanschlags. Die vierte Arbeitskammer bildet zudem den Ausgleichsbehälter. Das Gas ist vorzugsweise Stickstoff.

Weiter ist gemäß der Erfindung vorgesehen, dass die Durchlassvorrichtung des Druckkolbens eine Drosselvorrichtung zur Drosselung eines Fluidstroms zwischen der ersten und zweiten Arbeitskammer umfasst, über die das Dämpfungsverhalten bestimmt wird. Ferner umfasst der Druckerzeuger eine Abschlussplatte, die den zweiten Arbeitsraum auf dessen von dem Dämpferkolben abgewandten Seite abschließt, wobei die Abschlussplatte zumindest eine Durchlassvorrichtung mit einer Drosselvorrichtung umfasst. Die zweite Arbeitskammer des Druckzylinderinnenraums ist über die Drosselvorrichtung strömungswirksam mit der dritten Arbeitskammer des Federzylinderinnenraums verbunden. Der erste und der zweite Fluidkanal verlaufen abschnittsweise durch die Drosselvorrichtung oder werden abschnittsweise von der Drosselvorrichtung gebildet. Ein Fluidstrom von der zweiten Arbeitskammer zu der dritten Arbeitskammer und ein Fluidstrom durch den ersten und zweiten Fluidkanal ist durch die Drosselvorrichtung gedrosselt. Der Dämpfer ist durch den Druckerzeuger und die Gasfedereinheit gebildet. Dadurch können Dämpfer und Zusatzfedereinheit in Reihe zueinander angeordnet werden, sodass sowohl Dämpfer als auch eine umschaltbare Federrate in eine Seite einer Telegabel, also in ein Telegabelbein, integrierbar sind.

Durch die Drosselvorrichtung des Druckkolbens ist der Fluidfluss zwischen der ersten und zweiten Arbeitskammer gedrosselt, sodass beim Ein- oder Ausfahren der Kolbenstange eine Dämpfkraft mittels der Drosselvorrichtung des Druckkolbens erzeugt wird.

Beim Ausfahren der Kolbenstange aus dem Druckzylinder strömt Fluid von der ersten in die zweite Arbeitskammer, wobei das zusätzlich benötigte Fluid mit dem Volumen des Abschnitts der Kolbenstange, der ausfährt, ersetzt, strömt vorzugsweise ungedrosselt aus der Zusatzfedereinheit oder dem Fluid-Ausgleichsbehälter durch Drosselvorrichtung der Abschlussplatte.

Beim Einfahren der Kolbenstange in den Druckzylinder strömt Fluid von der zweiten in die erste Arbeitskammer, wobei das überschüssige von der Kolbenstange verdrängte Fluid gedrosselt aus der zweiten Arbeitskammer durch die Drosselvorrichtung der Abschlussplatte in die Zusatzfedereinheit oder den Fluid-Ausgleichbehälter strömt.

Der durch die Dämpfung in dem Druckzylinder zusätzlich erzeugte Druck, wird unabhängig von einer Stellung der Schalteinrichtung gegen die Gasfeder abgestützt, sodass die Dämpfung durch den Dämpfer und die Federwirkung der Zusatzfeder entkoppelt sind.

Der Gasfederzylinder und der Federzylinder sind bei einer weiteren Weiterbildung, die von Vorteil ist, integral durch einen Zusatzzylinder gebildet. In dem Zusatzzylinder grenzen die Gasfederkammer und die Federkammer aneinander an. Die Gasfederkammer und die Federkammer können in Reihe zueinander angeordnet sein oder nebeneinander. Beispielsweise könnte der Zusatzzylinder u-förmig ausgebildet sein, wobei die Gasfederkammer in einem ersten Schenkel des u-förmigen Zusatzzylinders und die Federkammer in einem zweiten Schenkel des u-förmigen Zusatzzylinders ausgebildet ist.

Die Gasfederkammer und die Federkammer sind bei einer Weiterbildung strömungswirksam miteinander verbunden. Die Gasfederkammer und die Federkammer bilden damit ein gemeinsames Volumen, in welchem sich das Gas befindet, sodass die Gasfeder sowohl in der Gasfederkammer als auch der Federkammer wirkt. Der dritte und vierte Arbeitsraum sind wiederum über die Fluidkanäle miteinander verbunden, sodass der dritte und vierte Arbeitsraum für das Fluid strömungswirksam und die Gasfeder- und Federkammer für das Gas strömungswirksam verbunden sind.

Das Feder-Dämpfersystem weist bei einer vorteilhaften Ausführungsvariante eine Anschlussvorrichtung auf, mit der es mit dem Kraftfahrzeug verbunden ist. Die Anschlussvorrichtung ist vorzugsweise eine Klemmfaust welche eine Radachse des Kraftfahrzeugs führt und die an dem Druckerzeuger oder dem Hohlzylinder in Reihe zu dem Druckerzeuger angeordnet sowie mit ihr verbunden ist. In der Anschlussvorrichtung ist zumindest die Zusatzfedereinheit ausgebildet oder angeordnet. Vorteilhaft ist insbesondere eine Ausführungsform, bei dem der Zusatzzylinder von einem Hohlraum der Anschlussvorrichtung gebildet ist, die Sperrvorrichtung an oder in der Anschlussvorrichtung angeordnet ist und sich die Fluidkanäle durch die Anschlussvorrichtung erstrecken.

Erfindungsgemäß wird ferner eine Teleskopgabel, insbesondere für ein Einspurkraftfahrzeug, mit einem erfindungsgemäßen Feder-Dämpfersystem vorgeschlagen. Ein Einspurkraftfahrzeug sind alle einspurigen Kraftfahrzeuge wie beispielsweise Motorräder. Vorzugsweise weist die Teleskopgabel zwei Gabelbeine auf, wobei nur ein Gabelbein ein erfindungsgemäßes Feder-Dämpfersystem umfasst. Ferner ist ein Gabelbein vorzugsweise aus einem Hohlzylinder und einem Ausgleichszylinder gebildet, der dicht an dem Hohlzylinder anliegt und relativ zu dem Hohlzylinder in Richtung einer gemeinsamen Längsachse bewegbar ist. Der Hohlzylinder bildet ferner vorzugsweise den Druckzylinder und den Federzylinder aus. Bei einer alternativen Ausführungsform umfasst jedes Gabelbein jeweils ein erfindungsgemäßes Feder-Dämpfersystem mit einer Gasfedereinheit, bei dem der jeweilige Druckerzeuger mit der Gasfedereinheit einen Dämpfer bildet.

Die vorstehend offenbarten Merkmale sind beliebig kombinierbar, soweit dies technisch möglich ist und diese nicht im Widerspruch zueinander stehen. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1 eine schematische Darstellung eines nicht erfindungsgemäßen Feder-Dämpfersystems;
Fig. 2 ein nicht erfindungsgemäßes Feder-Dämpfersystem in einem ersten Zustand;
Fig. 3 ein nicht erfindungsgemäßes Feder-Dämpfersystem in einem zweiten Zustand;
Fig. 4 ein nicht erfindungsgemäßes Feder-Dämpfersystem in einem dritten Zustand;
Fig. 5 eine schematische Darstellung eines erfindungsgemäßen Feder-Dämpfersystems;
Fig. 6 2. ein erfindungsgemäßes Feder-Dämpfersystem in einem ersten Zustand;
Fig. 7 ein erfindungsgemäßes Feder-Dämpfersystem in einem zweiten Zustand;

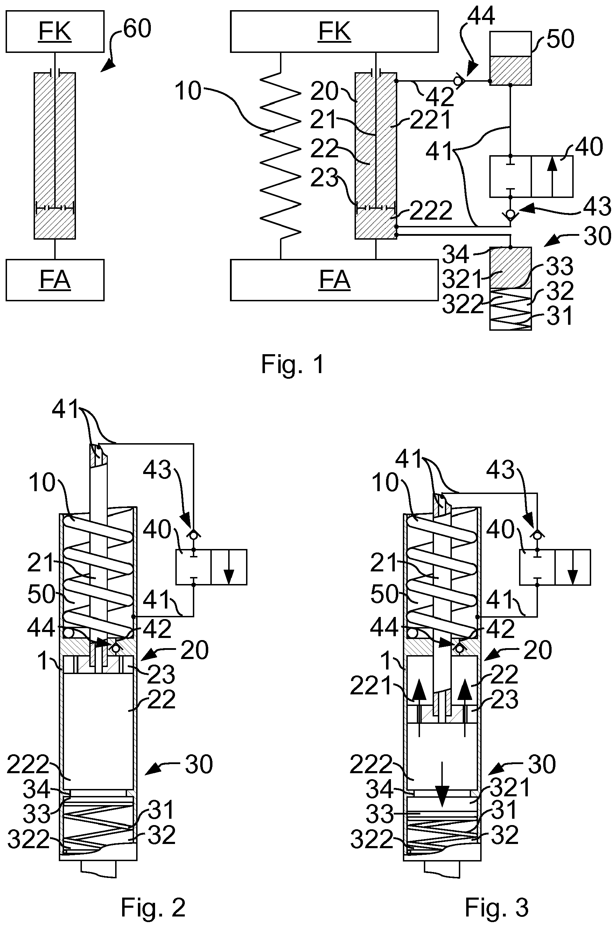

Die Figuren sind beispielhaft schematisch. Gleiche Bezugszeichen in den Figuren weisen auf gleiche funktionale und/oder strukturelle Merkmale hin. Figur 1 stellt das Feder-Dämpfersystem zur besseren Veranschaulichung schematisch dar. Die Tragfeder 10 und der Druckerzeuger 20 wirken parallel und sind jeweils mit einer Fahrzeugkarosserie FK und einer Fahrzeugachse FA verbunden. Zudem ist schematisch der als Dämpferzylinder ausgebildete Dämpfer 60 dargestellt, der ebenfalls mit der Fahrzeugkarosserie FK und der Fahrzeugachse FA verbunden ist und somit parallel zu der Tragfeder 10 wirkt. Der Druckerzeuger 20 besteht aus einem Druckzylinder, in den sich von einer Seite aus eine Kolbenstange 21 hinein erstreckt. Die Kolbenstange 21 ist an seiner außerhalb des Druckzylinders angeordneten Seite über eine Anbindungsvorrichtung mit der Fahrzeugkarosserie FK verbunden. Auf der in dem Druckzylinder liegenden Seite der Druckkolbenstange 21 ist der Drucckolben 23 angeordnet. Der Druckkolben 23 teilt den Druckzylinderinnenraum 22 in eine erste Arbeitskammer 221, durch den die Kolbenstange 21 verläuft, und in eine zweite Arbeitskammer 222. Der Druckkolben 23 weist zudem Bohrungen als eine Durchlassvorrichtung auf, welche einen Fluidstrom zwischen der ersten und zweiten Arbeitskammer im Wesentlichen ungedrosselt ermöglichen. Das Dämpfungsverhalten des Feder-Dämpfersystems wird durch den Dämpfer 60 bestimmt. Die Zusatzfedereinheit 30 bzw. die dritte Arbeitskammer 321 der Zusatzfedereinheit 30 ist strömungswirksam mit der zweiten Arbeitskammer 222 verbunden. In dem Federzylinderinnenraum 32 des Federzylinders, der ein Gehäuse der Zusatzfedereinheit 30 bildet, ist die Zusatzfeder 31 angeordnet, welche einen Trennkolben 33 in Richtung eines Trennkolbenanschlag 34 drückt, welcher in der schematischen Darstellung der Figur 1 durch den Federzylinder ausgebildet ist, wobei der Trennkolben 33 den Federzylinderinnenraum 32 in die dritte Arbeitskammer 321 und eine Federkammer 322 teilt, in dem die Zusatzfeder 31 angeordnet ist. Der Trennkolben 33 dichtet die dritte Arbeitskammer 321 gegenüber der Federkammer 322 ab, sodass die Federkammer 322 frei von Fluid ist. Ausgehend von der zweiten Arbeitskammer 222 erstreckt sich ein erster Strömungskanal 41 über ein erstes Rückschlagventil 43 über ein 2/2-Wegeventil bzw. Sperrventil als Schalteinrichtung 40 in einen Fluid-Ausgleichsbehälter 50, wobei ein Volumenstrom des Fluides durch den ersten Fluidkanal 41 aufgrund des ersten Rückschlagventils 43 nur von der zweiten Arbeitskammer 222 in den Fluid-Ausgleichsbehälter 50 möglich ist und wobei sich die Schalteinrichtung 40 in der Blockierstellung befinden muss (Sperrventil in Durchflussstellung). Die Schalteinrichtung 40 ist in Figur 1 in der Freigabestellung dargestellt (Sperrventil in Sperrstellung). Ein zweiter Strömungskanal 42 erstreckt sich von dem Fluid-Ausgleichsbehälter 50 über ein zweites Rückschlagventil 44 in die erste Arbeitskammer 221, sodass ein Volumenstrom des Fluides durch den zweiten Strömungskanal 42 nur von dem Fluid-Ausgleichsbehälter in die erste Arbeitskammer 221 möglich ist.

Durch die Schaltstellung der Schalteinrichtung 40, also Blockierstellung und Freigabestellung, sind zwei Betriebsarten des Feder-Dämpfersystems möglich.

Befindet sich die Schalteinrichtung 40 in der Freigabestellung, also wie in Figur 1 dargestellt, wird ein Volumenstrom des Fluides von der zweiten Arbeitskammer 222 in den Fluid-Ausgleichsbehälter 50 durch die Schalteinrichtung 40 gesperrt. Bewegt sich die Kolbenstange 21 mit dem Druckkolben 23 in den Druckzylinder hinein, wird die erste Arbeitskammer 221 um ein Volumen V₁ vergrößert und die zweite Arbeitskammer 222 um ein Volumen V₂ verkleinert. Aufgrund des Volumens Vs des Abschnitts der Kolbenstange, der sich durch die erste Arbeitskammer 221 erstreckt, ist das zweite Volumen V₂ gleich der Summe aus dem ersten Volumen V₁ und dem Volumen Vs (V₂ = V₁ + Vs). Bewegt sich die Kolbenstange 21 mit dem Druckkolben 23 also in den Druckzylinder hinein, wird das Gesamtvolumen der ersten und zweiten Arbeitskammer 221, 222 um das Volumen Vs der Kolbenstange 21 reduziert. Durch die Durchlassvorrichtung des Druckkolbens 23 wird zwischen der ersten und zweiten Arbeitskammer 221, 222 ein Volumenstrom des Fluides ermöglicht, sodass das Volumen V₁ in der ersten Arbeitskammer 221 durch ein Fluid aus dem Volumen V₂ der zweiten Arbeitskammer 222 gefüllt wird. Aufgrund des Volumens Vs des Abschnitts der Kolbenstange 21, der sich durch die erste Arbeitskammer 221 erstreckt, muss das Volumen Vs aus dem Druckzylinder verdrängt werden. Da ein Volumenstrom in den Fluid-Ausgleichsbehälter 50 von der Sperreinrichtung 40 gesperrt ist, wird das Volumen Vs durch die strömungswirksame Verbindung der zweiten Arbeitskammer 222 mit der Zusatzfedereinheit 30 in die dritte Arbeitskammer 321 gedrückt. Das Volumen Vs wirkt gegen den Trennkolben 33 und drückt diesen, die dritte Arbeitskammer 321 vergrößernd, gegen die Zusatzfeder 31. Die von der Zusatzfeder 31 über den Trennkolben 33 ausgeübte Federkraft erhöht den Druck in dem Druckzylinder und wirkt über den Druckkolben 23 auf die Kolbenstange 21, sodass diese aus dem Druckzylinder gedrückt wird. Die Zusatzfeder 31 wirkt somit parallel zu dem Druckerzeuger 20 und zu der Tragfeder 10, sodass sich die Gesamtfederrate bzw. Gesamtfederkonstante k_{G} der Tragfeder 10 und der Zusatzfeder 31 aus der Summe der einzelnen Federkonstanten ergibt. Bewegt sich die Kolbenstange 21 aus dem Druckzylinder heraus, sodass die zweite Arbeitskammer 222 vergrößert und die erste Arbeitskammer 221 verkleinert wird, strömt das verdrängte Volumen aus der ersten in die zweite Arbeitskammer 221, 222, wobei das zusätzlich benötigte Fluid mit dem Volumen Vs aus der dritten Arbeitskammer 321 in die zweite Arbeitskammer 222 strömt.

Befindet sich die Schalteinrichtung 40 in ihrer Blockierstellung, wird das überschüssige Volumen Vs beim Einfahren der Kolbenstange 21 in den Druckzylinder aus der zweiten Arbeitskammer 222 in den Fluid-Ausgleichsbehälter 50 verdrängt und strömt beim Ausfahren der Kolbenstange 21 aus dem Ausgleichsbehälter 50 über den zweite Fluidkanal 44 in den Druckzylinderinnenraum 22. Die Zusatzfeder 31 wird dabei nicht mit Druck beaufschlagt, sodass die Federkonstante kz der Zusatzfeder 31 nicht in die Gesamtfederkonstante k_{G} eingeht und sich diese im Wesentlichen aus der Federkonstante k_{T} der Tragfeder ergibt.

Die Figuren 2 bis 4 zeigen ein nicht erfindugsgemäßes Beispiel eines Feder-Dämpfersystems in verschiedenen Zuständen, wobei jeweils die Beschreibung zu dem schematisch dargestellten Feder-Dämpfersystem der Figur 1 gilt. Das Federdämpfersystem der Figuren 2 bis 4 zeigt jeweils nicht den Dämpfer 60 und weist jeweils einen Hohlzylinder 1 auf, der integral den Fluid-Ausgleichsbehälter 50, den Druckzylinder und den Federzylinder bildet. Der Hohlzylinder 1 ist abschnittsweise und in einer Schnittdarstellung gezeigt, sodass zumindest ein Teil der in ihm angeordneten Komponenten sichtbar ist. Der Hohlzylinder 1 weist eine erste Stützwand auf seiner von der Tragfeder 10 abgewandten Seite auf, an der sich die Zusatzfeder 31 abstützt. Die Zusatzfeder 31 presst den nicht geschnitten dargestellten Trennkolben 33 gegen den Trennkolbenanschlag 34, der als umlaufender Vorsprung an einer Hohlzylinderinnenfläche ausgebildet ist. Der Trennkolbenanschlag 34 bildet den Abschluss der Zusatzfedereinheit 30 und dient als Bewegungsbegrenzung für den Trennkolben 33, sodass sich dieser nicht in den Druckzylinderinnenraum 22 hinein bewegen kann. Der Abschnitt des Hohlzylinders 1, in dem die Kolbenstange 21 außerhalb der Druckzylinderinnenraums 22 verläuft bildet zumindest abschnittsweise zugleich den Fluid-Ausgleichsbehälter 50 und einen Federraum aus, in dem die Tragfeder 10 angeordnet ist. Die Tragfeder 10 verläuft zumindest zum Teil in einem Fluidbad, das aus dem in dem Fluid-Ausgleichsbehälter 50 befindlichen Fluid gebildet ist. Der Drucckolben 23 ist geschnitten dargestellt, sodass die aus Bohrungen gebildete Durchlassvorrichtung sichtbar ist. Die Kolbenstange 21 ist im Teilschnitt dargestellt, wobei sich ein Abschnitt der ersten Fluidleitung 41 entlang der Längsachse der Kolbenstange 21 und mittig in dieser erstreckt. Der zweite Fluidkanal 43 mit dem zweiten Rückschlagventil 44 sind in eine Zwischenwand des Hohlzylinders 1 integriert, welchen einen Durchlass für die Kolbenstange 21 aufweist und einen Abschluss des Druckzylinders bildet. Die Schalteinrichtung 40 und ein weiterer Abschnitt des ersten Fluidkanals 41 sind schematisch dargestellt, wobei diese bei dem gezeigten Beispiel vorzugsweise in dem Hohlzylinder 1 oder in Längsrichtung an diesen angrenzend angeordnet sind.

In Figur 2 befindet sich die Schalteinrichtung 40 in ihrer Freigabestellung und der Druckerzeuger 20 in einer vollständig ausgefahrenen Stellung, sodass die erste Arbeitskammer 221 in ihrem Volumen minimal ist. Die Zusatzfeder 31 ist wird durch das Fluid in dieser Stellung nicht mit Druck beaufschlagt, sodass der Trennkolben 33 an dem Trennkolbenanschlag 34 anliegt.

Der Druckkolben 23 mit der Kolbenstange 21 sind in der Darstellung der Figur 2 ein Stück in den Druckzylinder hinein bewegt, sodass das Fluid in der zweiten Arbeitskammer 222 durch die Durchlassvorrichtung des Druckkolbens 23 in die erste Arbeitskammer 221 strömt und zugleich in den Zusatzfederzylinder, was jeweils durch die Pfeile in dem Hohlzylinder 1 angedeutet ist. In dem Federzylinder drückt das Fluid den Trennkolben 34 aus seiner Ausgangsstellung, in der er an dem Trennkolbenanschlag 34 anliegt, gegen die Federkraft der Zusatzfeder 31 nach unten.

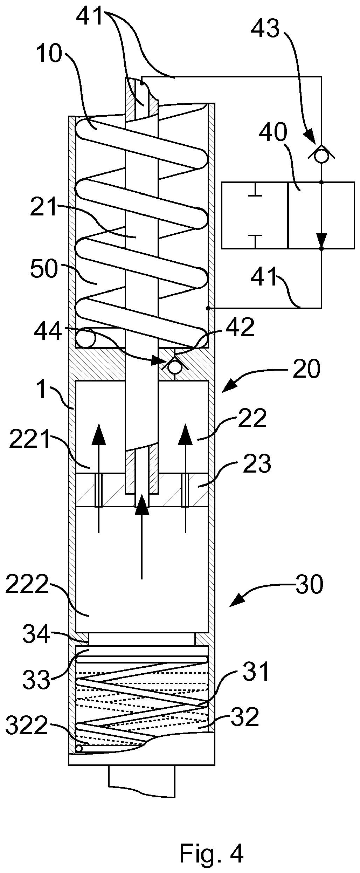

Figur 4 zeigt ein Feder-Dämpfersystem mit der Schalteinrichtung 40 in der Blockierstellung und mit der Kolbenstange 21 und dem Druckkolben 23 in einer Stellung, in der diese in den Druckzylinder hinein bewegt sind. Durch die Blockierstellung der Schalteinrichtung 40, strömt das überschüssige Fluid aus dem zweiten Arbeitskammer 222 mit dem Volumen Vs nicht in die Zusatzfedereinheit, sondern durch den ersten Fluidkanal 41 in den Fluid-Ausgleichsbehälter 50, was durch die Pfeile in dem Hohlzylinder 1 angedeutet wird. Die Zusatzfeder 31 wird von dem Fluid nicht druckbeaufschlagt, sodass die Federkonstante kz der Zusatzfeder 31 nicht zu der Gesamtfeder k_{G} des Feder-Dämpfersystems beiträgt.

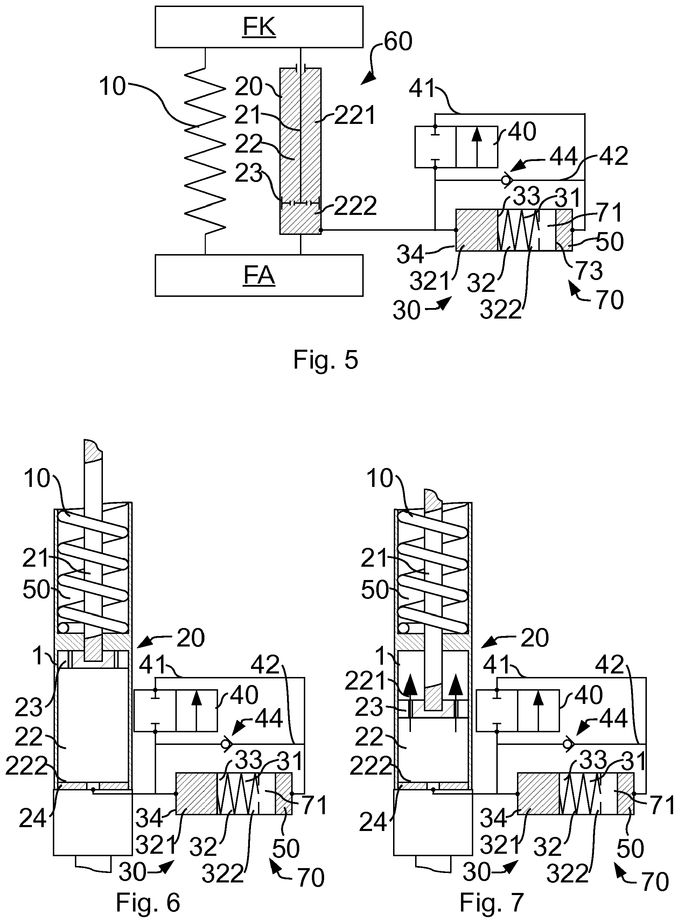

In Figur 5 ist eine Ausführungsform des erfindungsgemäßen Feder-Dämpfersystems schematisch dargestellt. Die Beschreibung zu dem Feder-Dämpfersystem der Figur 1 gilt analog, jedoch sind bei dem Feder-Dämpfersystem der Figur 5 der Druckerzeuger 20 und der Dämpfer 60 integral miteinander ausgebildet. Der Druckkolben 23 weist Bohrungen mit einer Drosselvorrichtung als eine Durchlassvorrichtung auf, welche einen Fluidstrom zwischen der ersten und zweiten Arbeitskammer 221, 222 gedrosselt ermöglichen und im Gegensatz zu dem Druckkolben in Figur 1 ein Dämpfungsverhalten des Feder-Dämpfersystems bestimmen. Das Feder-Dämpfersystem aus Figur 5 umfasst eine aus einem Gasfederzylinder gebildete Gasfedereinheit 70. Der Gasfederzylinderinnenraum 71 ist mit Stickstoff gefüllt, und wirkt über den Gastrennkolben 73 gegen das Fluid in dem Fluid-Ausgleichsbehälter 50 welche von der vierten Arbeitskammer der Gasfedereinheit gebildet ist. Ausgehend von der zweiten Arbeitskammer 222 erstreckt sich ein erster Strömungskanal 41 durch eine in Figur 5 nicht gezeigte Abschlusspatte 24 sowie ihre Drosselvorrichtung und über ein 2/2-Wegeventil bzw. Sperrventil als Schalteinrichtung 40 in den Fluid-Ausgleichsbehälter 50 bzw. in die vierte Arbeitskammer der Gasfedereinheit. Die Schalteinrichtung 40 muss sich in der Blockierstellung befinden (Sperrventil in Durchflussstellung), sodass der Fluidstrom von der zweiten Arbeitskammer 222 nur in die dritte Arbeitskammer 321 führen kann. Die Schalteinrichtung 40 ist in Figur 5 in der Freigabestellung dargestellt (Sperrventil in Sperrstellung). Ein zweiter Strömungskanal 42 erstreckt sich von dem Fluid-Ausgleichsbehälter 50 durch die in Figur 5 nicht dargestellte Abschlussplatte 24 sowie ihre Drosselvorrichtung und über ein zweites Rückschlagventil 44 in die erste Arbeitskammer 221, sodass ein Volumenstrom des Fluides durch den zweiten Strömungskanal 42 nur von dem Fluid-Ausgleichsbehälter in die erste Arbeitskammer 221 möglich ist.

Durch die Durchflussvorrichtung mit Drosselvorrichtung des Druckkolbens 23 werden bei der erfindungsgemäßen Ausführungsform der Figuren 5 bis 7 eine Dämpfung der Bewegung der Kolbenstange 21 und damit eine Dämpfung der Tragfeder 10 erzeugt. Die beim Einfahren der Kolbenstange 21 in dem Druckzylinder auftretende Dämpfkraft stützt sich an der Abschlussplatte und der Gasfeder ab, verursacht jedoch keine Bewegung des Trennkolbens 33.

Für die Feder-Dämpfersysteme der Figuren 6 und 7 gilt die Beschreibung der Figur 5, wobei der Druckkolben 23 wiederum eine Durchlassvorrichtung mit Drosselvorrichtung umfasst. Die Abschlussplatte 24 bildet den Abschluss des Druckzylinders, wobei durch die Drosselvorrichtung der Abschlussplatte 24 Fluid ungedrosselt aus dem Fluid-Ausgleichsbehälter 50 und der dritten Arbeitskammer 321 in die zweite Arbeitskammer 222 oder gedrosselt und abhängig von der Stellung der Schalteinrichtung 40 von der zweiten Arbeitskammer 222 in die dritte Arbeitskammer 321 bzw. den Fluid-Ausgleichsbehälter 50 strömen kann.

Der durch die Dämpfung aufgebaute Druck bzw. die Dämpferkraft stützt sich unabhängig von der Stellung der Schalteinrichtung 40 an der Gasfedereinheit 70 ab ohne eine Bewegung des Trennkolbens 33 zu verursachen. Die Gasfederkammer 71 ist mit der Federkammer 32 strömungswirksam verbunden, sodass das Gas auch in der Federkammer 32 angeordnet ist und sowohl in der Federkammer 32 als auch in der Gasfederkammer 71 als Gasfeder wirkt. Unabhängig von der Stellung des Schalteinrichtung 40 stützt sich die Dämpferkraft daher über den Trennkolben 33 und den Gastrennkolben 71 gegen die Gasfeder ab, ohne jedoch den Trennkolben 33 zu bewegen, sodass die Dämpfkraft bzw. die Dämpfung keinen Einfluss auf die Federrate kz der Zusatzfeder, die Gesamtfederrate k_{G} oder die Federratenverstellung hat.

Die Erfindung beschränkt sich in ihrer Ausführung nicht auf das vorstehend angegebene erfindungsgemäße Ausführungsbeispiel. Vielmehr ist eine Anzahl von Varianten denkbar, welche von der dargestellten Lösung auch bei grundsätzlich anders gearteten Ausführungen Gebrauch macht. Beispielsweise könnte die Tragfeder um den Hohlzylinder verlaufend angeordnet sein.

## Patentansprüche

1. Feder-Dämpfersystem für eine Radaufhängung eines Kraftfahrzeugs
wobei das Feder-Dämpfersystem eine Tragfeder (10) mit einer Federkonstante k_{T}, einen zu der Tragfeder (10) parallel wirkenden und mit einem Fluid gefüllten Druckerzeuger (20), einen zu der Tragfeder (10) parallel wirkenden Dämpfer (60) und eine Zusatzfedereinheit (30) mit einer Zusatzfeder (31) umfasst, die eine Federkonstante kz aufweist,
wobei das Feder-Dämpfersystem eine Schalteinrichtung (40) mit einer Blockierstellung und einer Freigabestellung zum Schalten der Zusatzfeder (31) umfasst,
wobei die Schalteinrichtung (40) in der Blockierstellung die Zusatzfeder (31) sperrt und in der Freigabestellung die Zusatzfeder (31) mittels des Fluides zu der Tragfeder (10) parallel wirkt,
der Druckerzeuger (20) einen Druckzylinder, einen Druckkolben (23) und eine sich in einen Druckzylinderinnenraum (22) des Druckzylinders hinein erstreckende Kolbenstange (21) aufweist, an deren in dem Druckzylinderinnenraum (22) angeordneten Seite der Druckkolben (23) angeordnet ist, und der Druckkolben (23) den Druckzylinderinnenraum (22) in eine erste Arbeitskammer (221) und eine zweite Arbeitskammer (222) teilt, wobei der Druckkolben die erste Arbeitskammer (221) mit der zweiten Arbeitskammer (222) verbindende Durchlassvorrichtung aufweist und die Kolbenstange (21) sich durch die erste Arbeitskammer (221) erstreckt,
wobei die Zusatzfedereinheit (30) aus einem Federzylinder gebildet ist, in dessen Federzylinderinnenraum (32) die Zusatzfeder (31), ein Trennkolben (33) und ein Trennkolbenanschlag (34) angeordnet sind, der Trennkolben (33) den Federzylinderinnenraum (32) in eine dritte Arbeitskammer (321) und eine Federkammer (322) teilt, in welcher die Zusatzfeder (31) angeordnet ist, und wobei die Zusatzfeder (31) den Trennkolben (33) in dem Federzylinder in Richtung des Trennkolbenanschlags (34) drückt,
**dadurch gekennzeichnet, dass** das Feder-Dämpfersystem einen Fluid-Ausgleichsbehälter (50) sowie einen ersten und einen zweiten Fluidkanal (41, 42) aufweist,
die Schalteinrichtung (40) ein elektrisch steuerbares Sperrventil mit einer Sperrstellung und einer Durchflussstellung ist,
der Druckerzeuger (20) mittels des ersten Fluidkanals (41) über das Sperrventil (40) strömungswirksam mit dem Ausgleichsbehälter (50) und der Ausgleichsbehälter (50) mittels des zweiten Fluidkanals (42) strömungswirksam mit dem Druckerzeuger (20) verbunden sind,
wobei das Sperrventil (40) einen Fluidfluss durch den ersten Fluidkanal (41) in der Sperrstellung sperrt und in der Durchflussstellung freigibt, wobei die Sperrstellung des Sperrventils der Freigabestellung und die Durchflussstellung des Sperrventils der Blockierstellung entspricht,
wobei das Feder-Dämpfersystem eine Gasfedereinheit (70) umfasst, die Gasfedereinheit aus einem Gasfederzylinder gebildet ist, in dessen Gasfederzylinderinnenraum (71) ein als Gasfeder wirkendes Gas, ein Gastrennkolben (73) und ein Gastrennkolbenanschlag angeordnet sind, der Gastrennkolben den Gasfederzylinderinnenraum in eine vierte Arbeitskammer und eine Gasfederkammer teilt, in welcher das Gas angeordnet ist, und wobei die Gasfeder den Gastrennkolben permanent in dem Gasfederzylinder in Richtung des Gastrennkolbenanschlags drückt und die vierte Arbeitskammer den Ausgleichsbehälter (50) bildet
die Durchlassvorrichtung des Druckkolbens (23) eine Drosselvorrichtung zur Drosselung eines Fluidstroms zwischen der ersten und zweiten Arbeitskammer (221, 222) umfasst,
der Druckerzeuger (20) eine Abschlussplatte (24) umfasst, die den zweiten Arbeitsraum auf dessen von dem Dämpferkolben abgewandten Seite abschließt, wobei die Abschlussplatte (24) zumindest eine Durchlassvorrichtung mit einer Drosselvorrichtung umfasst, wobei
die zweite Arbeitskammer (222) des Druckzylinderinnenraums (22) über die Drosselvorrichtung strömungswirksam mit der dritten Arbeitskammer (321) des Federzylinderinnenraums (32) verbunden ist und der erste und zweite Fluidkanal abschnittsweise durch die Drosselvorrichtung verlaufen, sodass ein Fluidstrom von der zweiten Arbeitskammer (222) zu der dritten Arbeitskammer (321) und ein Fluidstrom durch den ersten und zweiten Fluidkanal (41, 42) gedrosselt ist, und wobei
der Dämpfer durch den Druckerzeuger (20) und die Gasfedereinheit gebildet ist.

2. Feder-Dämpfersystem nach dem vorhergehenden Anspruch, wobei
das Feder-Dämpfersystem einen Hohlzylinder (1) aufweist, indem zumindest die Zusatzfedereinheit (30) und der Druckerzeuger (20) in Reihe zueinander angeordnet sind.

3. Feder-Dämpfersystem nach einem der vorhergehenden Ansprüche, wobei
die zweite Arbeitskammer (222) des Druckzylinderinnenraums (22) strömungswirksam mit der dritten Arbeitskammer (321) des Federzylinderinnenraums (32) verbunden ist.

4. Feder-Dämpfersystem nach einem der vorhergehenden Ansprüche , wobei
ein erstes Rückschlagventil (43) in dem ersten Fluidkanal (41) angeordnet ist und einen Fluidfluss von dem Ausgleichsbehälter (50) in den Druckerzeuger (20) sperrt und/oder ein zweites Rückschlagventil (44) in dem zweiten Fluidkanal (42) angeordnet ist und einen Fluidfluss von dem Druckerzeuger (20) in den Ausgleichsbehälter (50) sperrt.

5. Feder-Dämpfersystem nach einem der vorhergehenden Ansprüche, wobei
der Gasfederzylinder und der Federzylinder integral durch einen Zusatzzylinder gebildet sind, ferner grenzen die Gasfederkammer und die Federkammer (322) in dem Zusatzzylinder aneinander an.

6. Feder-Dämpfersystem nach einem der vorhergehenden Ansprüche, wobei
die Gasfederkammer und die Federkammer (322) strömungswirksam miteinander verbunden sind.

7. Feder-Dämpfersystem nach einem der vorhergehenden Ansprüche, wobei
das Feder-Dämpfersystem eine Anschlussvorrichtung aufweist, mit der es mit dem Kraftfahrzeug verbindbar ist, welche in Reihe zu dem Druckerzeuger angeordnet ist, wobei zumindest die Zusatzfedereinheit in der Anschlussvorrichtung ausgebildet ist.

8. Teleskopgabel, insbesondere für ein Einspurkraftfahrzeug, mit einem Feder-Dämpfersystem nach zumindest einem der vorhergehenden Ansprüche.

## Claims

1. Spring-damper system for a wheel suspension of a motor vehicle,
wherein the spring-damper system comprises a load-bearing spring (10) with a spring constant k_{T}, a pressure generator (20) which acts parallel to the load-bearing spring (10) and is filled with a fluid, a damper (60) which acts parallel to the load-bearing spring (10), and an auxiliary-spring unit (30) which has an auxiliary spring (31) with a spring constant kz,
wherein the spring-damper system comprises a switching device (40) with a blocking position and a release position for switching the auxiliary spring (31),
wherein the switching device (40) blocks the auxiliary spring (31) in the blocking position and the auxiliary spring (31) acts parallel to the load-bearing spring (10) by means of the fluid in the release position,
the pressure generator (20) has a pressure cylinder, a pressure piston (23), and a piston rod (21) which extends into a pressure-cylinder interior space (22) of the pressure cylinder, the pressure piston (23) being arranged on that side of said piston rod which is arranged in the pressure-cylinder interior space (22), and the pressure piston (23) divides the pressure-cylinder interior space (22) into a first working chamber (221) and a second working chamber (222), wherein the pressure piston has a passage apparatus which connects the first working chamber (221) to the second working chamber (222) and the piston rod (21) extends through the first working chamber (221),
wherein the auxiliary-spring unit (30) is formed from a spring cylinder, in the spring-cylinder interior space (32) of which the auxiliary spring (31), a separating piston (33) and a separating-piston stop (34) are arranged, the separating piston (33) dividing the spring-cylinder interior space (32) into a third working chamber (321) and a spring chamber (322) in which the auxiliary spring (31) is arranged, and wherein the auxiliary spring (31) pushes the separating piston (33) in the spring cylinder in the direction of the separating-piston stop (34),
**characterized in that**
the spring-damper system has a fluid compensation container (50) and a first and a second fluid channel (41, 42),
the switching device (40) is an electrically controllable shut-off valve with a shut-off position and a throughflow position,
the pressure generator (20) is connected in terms of flow to the compensation container (50) by means of the first fluid channel (41) via the shut-off valve (40), and the compensation container (50) is connected in terms of flow to the pressure generator (20) by means of the second fluid channel (42),
wherein a fluid flow through the first fluid channel (41) is blocked in the shut-off position, and is released in the throughflow position, by the shut-off valve (40), wherein the shut-off position of the shut-off valve corresponds to the release position and the throughflow position of the shut-off valve corresponds to the blocking position,
wherein the spring-damper system comprises a gas-spring unit (70), the gas-spring unit being formed from a gas-spring cylinder, in the gas-spring-cylinder interior space (71) of which a gas acting as a gas spring, a gas-separating piston (73) and a gas-separating piston stop are arranged, the gas-separating piston dividing the gas-spring-cylinder interior space into a fourth working chamber and a gas-spring chamber in which the gas is arranged, and wherein the gas spring permanently pushes the gas-separating piston in the gas-spring cylinder in the direction of the gas-separating-piston stop and the fourth working chamber forms the compensation container (50),
the passage apparatus of the pressure piston (23) comprises a throttle apparatus for throttling a fluid flow between the first and second working chambers (221, 222),
the pressure generator (20) comprises a closure plate (24) which closes off the second working chamber on its side facing away from the damper piston, wherein the closure plate (24) comprises at least one passage apparatus with a throttle apparatus, wherein
the second working chamber (222) of the pressure-cylinder interior space (22) is connected in terms of flow to the third working chamber (321) of the spring-cylinder interior space (32) via the throttle apparatus, and the first and second fluid channels sectionally run through the throttle apparatus such that a fluid flow from the second working chamber (222) to the third working chamber (321) and a fluid flow through the first and second fluid channels (41, 42) are throttled, and wherein
the damper is formed by the pressure generator (20) and the gas-spring unit.

2. Spring-damper system according to the preceding claim, wherein
the spring-damper system has a hollow cylinder (1) in which at least the auxiliary-spring unit (30) and the pressure generator (20) are arranged in series with respect to one another.

3. Spring-damper system according to either of the preceding claims, wherein
the second working chamber (222) of the pressure-cylinder interior space (22) is connected in terms of flow to the third working chamber (321) of the spring-cylinder interior space (32).

4. Spring-damper system according to one of the preceding claims, wherein
a first check valve (43) is arranged in the first fluid channel (41) and blocks a fluid flow from the compensation chamber (50) into the pressure generator (20), and/or a second check valve (44) is arranged in the second fluid channel (42) and blocks a fluid flow from the pressure generator (20) into the compensation chamber (50).

5. Spring-damper system according to one of the preceding claims, wherein
the gas-spring cylinder and the spring cylinder are formed integrally by an auxiliary cylinder, and furthermore the gas-spring chamber and the spring chamber (322) adjoin one another in the auxiliary cylinder.

6. Spring-damper system according to one of the preceding claims, wherein
the gas-spring chamber and the spring chamber (322) are connected to one another in terms of flow.

7. Spring-damper system according to one of the preceding claims, wherein
the spring-damper system has a connection apparatus by way of which it can be connected to the motor vehicle, said connection apparatus being arranged in series with respect to the pressure generator, wherein at least the auxiliary-spring unit is formed in the connection apparatus.

8. Telescopic fork, in particular for a single-track motor vehicle, having a spring-damper system according to at least one of the preceding claims.

## Revendications

1. Système amortisseur à ressort pour une suspension de roue d'un véhicule automobile,
le système amortisseur à ressort comportant un ressort de support (10) présentant une constante de rappel k_{T}, un générateur de pression (20) agissant parallèlement au ressort de support (10) et rempli d'un fluide, un amortisseur (60) agissant parallèlement au ressort de support (10) et une unité à ressort supplémentaire (30) dotée d'un ressort supplémentaire (31) qui présente une constante de rappel k_{Z},
le système amortisseur à ressort comportant un dispositif de commutation (40) présentant une position de blocage et une position de libération pour la commutation du ressort supplémentaire (31),
le dispositif de commutation (40) bloquant le ressort supplémentaire (31) dans la position de blocage et le ressort supplémentaire (31) agissant parallèlement au ressort de support (10) au moyen du fluide dans la position de libération,
le générateur de pression (20) comprenant un cylindre de pression, un piston de pression (23) et une tige de piston (21) s'étendant dans un espace intérieur (22) du cylindre de pression, tige de piston sur le côté, disposé dans l'espace intérieur de cylindre de pression (22), de laquelle le piston de pression (23) est disposé, et le piston de pression (23) divisant l'espace intérieur de cylindre de pression (22) en une première chambre de travail (221) et une deuxième chambre de travail (222), le piston de pression comprenant un dispositif de passage reliant la première chambre de travail (221) à la deuxième chambre de travail (222) et la tige de piston (21) s'étendant à travers la première chambre de travail (221),
l'unité à ressort supplémentaire (30) étant formée à partir d'un cylindre de ressort, dans l'espace intérieur de cylindre de ressort (32) duquel le ressort supplémentaire (31), un piston de séparation (33) et une butée de piston de séparation (34) sont disposés, le piston de séparation (33) divisant l'espace intérieur de cylindre de ressort (32) en une troisième chambre de travail (321) et une chambre de ressort (322), dans laquelle le ressort supplémentaire (31) est disposé, et le ressort supplémentaire (31) pressant le piston de séparation (33) dans le cylindre de ressort en direction de la butée de piston de séparation (34), **caractérisé en ce que**
le système amortisseur à ressort comprend un récipient de compensation de fluide (50) ainsi qu'un premier et un deuxième canal de fluide (41, 42),
le dispositif de commutation (40) est une soupape d'arrêt pouvant être commandée électriquement présentant une position d'arrêt et une position d'écoulement,
le générateur de pression (20) est relié de manière fluidique au récipient de compensation (50) au moyen du premier canal de fluide (41) par le biais de la soupape d'arrêt (40) et le récipient de compensation (50) est relié de manière fluidique au générateur de pression (20) au moyen du deuxième canal de fluide (42),
la soupape d'arrêt (40) bloquant un flux de fluide à travers le premier canal de fluide (41) dans la position d'arrêt et le libérant dans la position d'écoulement, la position d'arrêt de la soupape d'arrêt correspondant à la position de libération et la position d'écoulement de la soupape d'arrêt correspondant à la position de blocage, le système amortisseur à ressort comportant une unité de ressort à gaz (70), l'unité de ressort à gaz étant formée à partir d'un cylindre de ressort à gaz, dans l'espace intérieur de cylindre de ressort à gaz (71) duquel un gaz agissant comme ressort à gaz, un piston de séparation de gaz (73) et une butée de piston de séparation de gaz sont disposés, le piston de séparation de gaz divisant l'espace intérieur de cylindre de ressort à gaz en une quatrième chambre de travail et une chambre de ressort à gaz, dans laquelle le gaz est disposé, et le ressort à gaz pressant de manière permanente le piston de séparation de gaz dans le cylindre de ressort à gaz en direction de la butée de piston de séparation de gaz et la quatrième chambre de travail formant le récipient de compensation (50),
le dispositif de passage du cylindre de pression (23) comportant un dispositif d'étranglement servant à l'étranglement d'un écoulement de fluide entre la première et la deuxième chambre de travail (221, 222), le générateur de pression (20) comportant une plaque de fermeture (24) qui ferme le deuxième espace de travail sur son côté opposé au piston d'amortisseur, la plaque de fermeture (24) comportant au moins un dispositif de passage doté d'un dispositif d'étranglement,
la deuxième chambre de travail (222) de l'espace intérieur de cylindre de pression (22) étant reliée de manière fluidique à la troisième chambre de travail (321) de l'espace intérieur de cylindre de ressort (32) par le biais du dispositif d'étranglement et le premier et le deuxième canal de fluide s'étendant dans certaines parties à travers le dispositif d'étranglement, de sorte qu'un flux de fluide de la deuxième chambre de travail (222) à la troisième chambre de travail (321) et un flux de fluide à travers le premier et le deuxième canal de fluide (41, 42) soient étranglés, et
l'amortisseur étant formé par le générateur de pression (20) et l'unité de ressort à gaz.

2. Système amortisseur à ressort selon la revendication précédente,
le système amortisseur à ressort comprenant un cylindre creux (1), par le fait qu'au moins l'unité à ressort supplémentaire (30) et le générateur de pression (20) sont disposés en série l'un avec l'autre.

3. Système amortisseur à ressort selon l'une des revendications précédentes,
la deuxième chambre de travail (222) de l'espace intérieur de cylindre de pression (22) étant reliée de manière fluidique à la troisième chambre de travail (321) de l'espace intérieur de cylindre de ressort (32).

4. Système amortisseur à ressort selon l'une des revendications précédentes,
une première soupape anti-retour (43) étant disposée dans le premier canal de fluide (41) et bloquant un flux de fluide à partir du récipient de compensation (50) dans le générateur de pression (20) et/ou une deuxième soupape anti-retour (44) étant disposée dans le deuxième canal de fluide (42) et bloquant un flux de fluide à partir du générateur de pression (20) dans le récipient de compensation (50).

5. Système amortisseur à ressort selon l'une des revendications précédentes,
le cylindre de ressort à gaz et le cylindre de ressort étant formés d'un seul tenant par un cylindre supplémentaire, la chambre de ressort à gaz et la chambre de ressort (322) étant en outre adjacentes l'une à l'autre dans le cylindre supplémentaire.

6. Système amortisseur à ressort selon l'une des revendications précédentes,
la chambre de ressort à gaz et la chambre de ressort (322) étant reliées de manière fluidique l'une à l'autre.

7. Système amortisseur à ressort selon l'une des revendications précédentes,
le système amortisseur à ressort comprenant un dispositif de raccordement, à l'aide duquel il peut être relié au véhicule automobile, lequel dispositif de raccordement est disposé en série avec le générateur de pression, au moins l'unité de ressort supplémentaire étant réalisée dans le dispositif de raccordement.

8. Fourche télescopique, en particulier pour un véhicule automobile monovoie, présentant un système amortisseur à ressort selon au moins l'une des revendications précédentes.
